(19) **Europäisches Patentamt / European Patent Office / Office européen des brevets**

(11) **EP 4 011 834 A1**

(12) **EUROPEAN PATENT APPLICATION**

(43) Date of publication:
**15.06.2022 Bulletin 2022/24**

(21) Application number: **20212953.2**

(22) Date of filing: **10.12.2020**

(51) International Patent Classification (IPC):
**C01G 53/00** (2006.01)    **H01M 4/04** (2006.01)
**H01M 4/525** (2010.01)

(52) Cooperative Patent Classification (CPC):
**C01G 53/42; C01G 53/50; H01M 4/525;**
C01P 2002/77; C01P 2004/32; C01P 2004/51;
C01P 2004/61; C01P 2006/10; C01P 2006/11;
C01P 2006/12; C01P 2006/40; H01M 10/052

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
• **HARTMANN, Pascal**
  **67056 Ludwigshafen (DE)**
• **SOMMER, Heino**
  **72072 Tübingen (DE)**
• **TOMOTA, Yohko**
  **103-0022 Tokyo (JP)**
• **LEE, Robert Matthew**
  **67056 Ludwigshafen (DE)**
• **SÜLING, Carsten**
  **67056 Ludwigshafen (DE)**
• **MICHEL, Kathrin**
  **67056 Ludwigshafen (DE)**
• **RIEWALD, Felix Florian**
  **67061 Ludwigshafen (DE)**

(74) Representative: **BASF IP Association**
**BASF SE**
**GBI-C006**
**67056 Ludwigshafen (DE)**

(54) **PROCESS FOR MAKING AN ELECTRODE ACTIVE MATERIAL**

(57)    Process for making an electrode active material comprising the steps of:
(a) providing a target specification containing at least three electrode active material properties selected from elemental composition, primary particle size, crystallite size, average secondary particle diameter (D50), particle diameter distribution, residual lithium content, specific surface (BET), shape of secondary particles, lattice parameters, press density, electrochemical performance, tap density,
(b) providing process parameters selected from calcination temperature, calcination duration, saggar loading, gas composition and gas flow, and composition of mixture to be subjected to calcination,
(c) providing a model of relationship between electrode active material properties in accordance with (a) and process parameters according to (b),
(d) manufacturing an electrode active according to a process with parameters according to step (b) in a manufacturing unit,
(e) obtaining electrode active material sample(s) generated from manufacturing process (d)
(f) performing measurements on said sample(s) to determine the properties as specified in (a),
(g) providing results from step (f) to a processing device,
(h) determining the difference between target specification in accordance with (a) and sample measurements according to (f),
(i) refining the model from step (c),
(j) deriving new process parameters from the refined model from step (i), and
(k) providing an electronic signal based on new process parameters of step (j) to a production control function in the manufacturing unit.

EP 4 011 834 A1

**Description**

The present invention is directed to a process for making an electrode active material comprising the steps of:

(a) providing a target specification containing at least three electrode active material properties selected from elemental composition, primary particle size, crystallite size, average secondary particle diameter (D50), particle diameter distribution, residual lithium content, specific surface area (BET), shape of secondary particles, lattice parameters, press density, tap density, and electrochemical performance,
(b) providing process parameters selected from calcination temperature, calcination duration, saggar loading, gas composition and gas flow, rotation speed, tilt angle, and composition of mixture to be subjected to calcination,
(c) providing a model of relationship between electrode active material properties in accordance with (a) and process parameters according to (b),
(d) manufacturing an electrode active material according to a process with parameters according to step (b) in a manufacturing unit,
(e) obtaining electrode active material sample(s) generated from manufacturing process (d),
(f) performing measurements on said sample(s) to determine the properties as specified in (a),
(g) providing results from step (f) to a processing device,
(h) determining the difference between target specification in accordance with (a) and sample measurements according to (f),
(i) refining the model from step (c),
(j) deriving new process parameters from the refined model according to (i), and
(k) providing an electronic signal based on new process parameters of step (j) to a production control function in the manufacturing unit.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Cathode active materials are generally manufactured by using a two-stage process. In a first stage, a sparingly soluble compound of the transition metal(s) is made by precipitating it from a solution, for example a carbonate or a hydroxide. Said sparingly soluble salts are in many cases also referred to as precursors. In a second stage, a precursor is mixed with a lithium compound, for example $Li_2CO_3$, LiOH or $Li_2O$, and calcined at high temperatures, for example at 600 to 1100°C. In special recipes, dopants may be added, for example alumina, titania, zirconia, or oxides or (oxy)hydrides of transition metals such as Nb, Ta, W, Mo or the like.

Several technical issues are still to be resolved. Volumetric energy density, capacity fade, cycling stability are still fields of research and development. However, in production additional problems have been detected. Although a constant product quality is desired sometimes the quality and the composition varies in broad ranges. And, while minor deviations from the target specification may be tolerated strong deviations may not. Strong variation of quality, however, may lead to higher amounts of product not meeting the specification, hereinafter also referred to as "off-spec" material, and to a cost increase.

It is tedious, though, to in each case adapt a production process as soon as a deviation from the target specification is observed.

It was therefore an objective to provide a process that leads to a more homogeneous product quality in the manufacture of electrode active materials and to a reduced amount of off-spec material.

Accordingly, the process defined at the outset has been found, hereinafter also referred to as "inventive process" or as "process according to the (present) invention". The inventive process comprises a sequence of several steps as defined at the outset, hereinafter also defined as step (a), step (b), step (c) etc. The inventive process will be described in more detail below.

By performing the inventive process, an electrode active material is made. Said electrode active material may be described by the general formula $Li_{1+x}TM_{1-x}O_2$ with TM containing nickel. Although in some embodiments, TM is nickel it is preferred that TM contains at least one metal other than nickel, for example aluminum, manganese, cobalt, titanium, zirconium, or combinations of at least two of the aforementioned.

Some metals are ubiquitous such as sodium, calcium or zinc and traces of them virtually present everywhere, but such traces will not be taken into account in the description of the present invention. Traces in this context will mean amounts of 0.05 mol-% or less, referring to the total metal content TM.

In a preferred embodiment, TM contains nickel and at least one of cobalt and manganese and, optionally, at least one of Mg, Al and Y or a transition metal selected from Ti, Zr, Nb, Ta, Fe, Mo, and W. In embodiments wherein the majority of TM is manganese, x is preferably in the range of from zero to 0.3. In embodiments wherein the molar amount of nickel is at least the same or higher than the molar amount of manganese, x is preferably in the range of from -0.02 to 0.15.

In one embodiment of the present invention, said electrode active material has an average particle diameter (D50) in the range of from 3 to 20 $\mu$m, preferably from 5 to 16 $\mu$m. The average particle diameter may be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the primary particles of said electrode active material have an average diameter (D50) in the range from 1 to 2000 nm, preferably from 10 to 1000 nm, particularly preferably from 50 to 500 nm. The average primary particle diameter may, for example, be determined by SEM or TEM, or by LASER scattering. In the context of the present invention, the average primary particle diameter may also be referred to as average particle size.

Crystallite size refers to the mean size of the ordered (crystalline) domains within a sample and may be determined by X-ray diffraction or TEM. Crystallite size may range from 1 to 2000 nm, preferably from 10 to 1000 nm, particularly preferably from 50 to 500 nm

In one embodiment of the present invention, said electrode active material is characterized by a particle diameter distribution that may be monomodal, bimodal, and have a certain width. For example, said electrode active material may have a particle diameter distribution span in the range of from 0.5 to 0.9, the span being defined as [(D90) - (D10)] divided by (D50), all being determined by LASER analysis. In another embodiment of the present invention, said electrode active material may have a particle diameter distribution span in the range of from 1.1 to 1.8.

In one embodiment of the present invention, TM is a combination of metals according to general formula (I)

$$(Ni_aCo_bMn_c)_{1-d}M^1_d \qquad (I)$$

wherein

a is in the range of from 0.6 to 0.99, preferably 0.6 to 0.94, and more preferably 0.6 to 0.87,
b being in the range of from zero to 0.2, preferably 0.05 to 0.2,
c being in the range of from zero to 0.2, preferably 0.01 to 0.05, and
d being in the range of from zero to 0.1, preferably 0.001 to 0.005,

$M^1$ is selected from Al, Ti, Zr, W, Nb, Ta, Mo, Mg and combinations of at least two of the aforementioned, of which Al and Ti and Zr and combinations of at least two of the aforementioned are preferred,

$$a + b + c = 1,$$

and

at least one of b, c and d is greater than zero.

In an alternative embodiment, TM is a combination of metals according to formula (I a)

$$(Ni_{a*}Co_{b*}Mn_{c*})_{1-d}M^1_d \qquad (I\ a)$$

wherein

a* is in the range of from 0.2 to 0.4, preferably 0.3 to 0.4,
b* being in the range of from zero to 0.2, preferably 0.01 to 0.1,
c being in the range of from 0.5 to 0.8, preferably 0.6 to 0.7, and
d being in the range of from zero to 0.1, preferably 0.001 to 0.005,

$M^1$ is selected from Al, Ti, Zr, W, Nb, Ta, Mo, Mg and combinations of at least two of the aforementioned, of which Al and Ti and Zr and combinations of at least two of the aforementioned are preferred,

$$a + b + c = 1$$

In one embodiment of the present invention, said electrode active material has a specific surface area (BET), hereinafter also referred to as "BET surface", in the range of from 0.1 to 50.0 m$^2$/g. In embodiments wherein TM corresponds to combinations of metals in accordance with formula (I), a BET surface in the range of from 0.1 to 2.0 is preferred. The BET surface may be determined by nitrogen adsorption after outgassing of the sample at 200°C for 30 minutes and, beyond this, according to DIN-ISO 9277:2003-05.

Said electrode active material has a target specification. Said target specification usually contains at least three electrode active material properties, preferably from three to ten, even more preferably from four to six electrode active material properties, such electrode active material properties being selected from elemental composition, primary particle size, crystallite size, average secondary particle diameter, residual lithium content, BET surface, shape of secondary particles, lattice parameters, press density, electrochemical performance, and tap density. Preferred electrode active material properties are selected from combinations of at least three, preferably four to six electrode active material properties selected from elemental composition, average secondary particle diameter, crystallite size, residual lithium content, BET surface, and shape of secondary particles.

Elemental composition, BET surface and average secondary particle diameter (D50) as well as average primary particle size have been defined above.

The residual lithium content - sometimes also referred to as soluble base content - may be determined by titration with acid, for example with 0.1 M aqueous HCl, after a defined period of interaction with water. It refers to the lithium compounds such as LiOH and Li$_2$CO$_3$ on the surface of electrode active material particles. Residual (or sometimes also termed "extractable lithium" refers to lithium compounds that are not integrated in the lattice of Li$_{1+x}$TM$_{1-x}$O$_2$. In embodiments wherein the nickel content is in the range of from 50 to 99 mol-% of TM residual lithium content is in the range of from 0.1 to 2 mol-%, referring to the total lithium content. Li$_2$CO$_3$ may also be referred to as carbonate content or C content.

Lattice parameters refer to the crystal lattice and may be determined by X-ray diffraction. Examples of lattice parameters and their preferred parameters are

a-axis: 2.75 - 2.95 Angstrom (Å),

c-axis: 13.8 - 15.0 Angstrom

unit cell volume: 90 - 113 (Angstrom)$^3$

occupancy of transition metals on lithium lattice site: 0 - 10%

occupancy of lithium on transition metal sites: 0 - 34%.

The above lattice parameters refer to a rhombohedral crystal structure representation (R3m space group) of an electrode active material that is isostructural with $\alpha$-NaFeO$_2$.

The pressed density of electrode active materials may be in the range of from 2.6 to 3.3 g/cm$^3$, preferably 2.7 to 3.2 g/cm$^3$. The pressed density is preferably determined at a pressure of 250 MPa although other pressures are possible, for example 200 MPa, then somewhat lower values of the pressed density are obtained.

The shape of electrode active materials is preferably spherical but small deviations from perfect may be acceptable. spherical shape, for example spheroidal particles. The term "spheroidal" shall include not just those which are exactly spherical but also those particles in which the maximum and minimum diameter of at least 90% (number average) of a representative sample differ by not more than 10%. Useful parameters may as well be the so-called aspect ratio of boundary box, which refers to longest diameter of a particle divided by the diameter of the vertical axis with respect to the longest diameter. The shape of secondary particles of said electrode active materials is preferably determined by SEM.

The tap density of electrode active materials may be in the range of from 1.20 to 1.80 g/cm$^3$, determined, e.g., after tapping 2,000 times in a graduated cylinder.

The electrochemical performance may include parameters like initial capacity (1$^{st}$ discharge capacity), Coulombic efficiency, cell resistance and long-term discharge capacity, for example discharge capacity after 100 cycles or after 50 cycles. For determination of the electrochemical performance, half-cells or full cell measurements may be applied. One example is coin cell performance.

In one embodiment of the present invention, said definition includes thresholds of deviation of said parameters. Such thresholds define from when on a deviation is deemed to be significant. Such thresholds are advantageously stored in a processing device.

Step (b) includes providing process parameters selected from calcination temperature, calcination duration, saggar loading, gas composition and gas flow, and composition of mixture to be subjected to calcination.

The calcination temperature includes the maximum temperature at which the respective precursor is reacted with the respective source of lithium. In many embodiments is the higher the higher the relative share of manganese is, compared to nickel. While precursors with a nickel content of 90 or more mole-%, referring to TM in Li$_{1+x}$TM$_{1-x}$O$_2$ may be calcined at 600 to 800°C, precursors with a manganese content of 60 to 70 mole-% and a nickel content of 25 to 35 mole-%, referring to TM, are advantageously calcined at temperatures in the range of from 900 to 950°C.

The calcination temperature may include a heating rate, for example from 1 to 5 °C per minute.

The calcination temperature may include a temperature profile, created for example by ramping up the temperature. In case of kilns with different temperature zones calcination duration may also refer to the residence time of said mixture within one zone.

The calcination profile may also include an optional pre-calcination step, for example a dehydration step on the precursor, preferably in the absence of source of lithium, in the range of from 100 to 600°C.

The calcination duration refers to the residence time of mixture of precursor and source of lithium at the maximum temperature and will neglect the heating time required for reaching said maximum temperature.

The saggar loading refers to calcination processes in which a saggar is used, for example in roller hearth kilns. The term saggar loading in the context of the present invention shall also include the loading of other vessels used in calcination such as open cups, crucibles, and pans. Calcination processes that make use of a rotary kiln do not make use of saggars, and, accordingly, saggar loading is not a process parameter for calcination processes applying a rotary kiln.

The rotation speed and the tilt angle may be of significance in embodiments wherein step (d) is performed in a rotary kiln. The tilt angle may be in the range of from zero to 5°, preferably from 0.25 to 3° (degrees). The rotation speed may be in the range of from 0.01 to 20 revolutions per minute, preferably 1 to 10 revolutions per minute, and the rotations may occur continuously or in interval mode. When operation in an interval mode is desired it is possible, for example, to stop the rotation after one to 5 rounds for one to 60 minutes, and then to again perform 1 to 5 rounds and again stop for 1 to 60 minutes, and so forth.

Gas composition and gas flow refers to the flow of oxygen containing gas. Several parameters may be varied - flow velocity, exchange rate, and oxygen content, for example from air, 20 vol-% of oxygen, up to pure oxygen. The higher the nickel content of TM the higher should be the oxygen content. Typical exchange rates in a roller hearth kiln may be in the range of from one to 30 per hour, preferred are 2 to 20 per hour.

In one embodiment of the present invention, process parameters according to step (b) are stored in a relational database, for example a PostgreSQL database.

Step (c) includes providing a model of relationship between electrode active material properties in accordance with (a) and process parameters according to (b). Said model comprises interactions and interdependencies of process parameters from step (b) with product specifications of step (a), and it is based on experimental results stored in a processing device. Said model may include algorithms. In one embodiment of the present invention, said model is a program containing a (set of) mathematical function(s) mapping the process parameters from step (b) to the product properties mentioned in (a).

In one embodiment of the present invention, a linear model such as a response surface model is generated. Said response surface model may include main effects terms, quadratic terms and interaction terms. Such a model is for example built using a commercially available software for statistical analysis. One Example of such commercially available software is JMP (SAS). Other examples may be software packages written in program languages like Python or R.

In one embodiment of the present invention, the model is based on machine learning. Machine learning models are trained on historical data - examples of model inputs and desired model outputs - and are often capable of learning complicated nonlinear relationships. For regression tasks, in which the model predictions of the electrode active material properties in accordance with (a) are continuous numbers, commonly used models are regularized linear regression, tree-ensembles such as random forests, kernel-based methods such as support vector machines and Gaussian processes, and artificial neural networks.

In one embodiment of the present invention the electrode active material properties and the process conditions are retrieved from a relational database, such as a PostgreSQL database, to generate the process model.

Step (d) includes making an electrode active material according to a process with parameters according to step (b) in a manufacturing unit. Said manufacture may be continuous, discontinuous or semi-continuous, and it is preferred to manufacture said electrode active material in commercial scale, for example at least 1 ton per hour. Such manufacture may include a step of mixing a suitable precursor with a source of lithium and, optionally, with one or more dopants, and it may include one or more calcination steps, for example, one to three calcination steps, each in the range of from 600 to 1,000°C.

Dopants are selected from oxides, hydroxides and oxyhydroxides of Mg, Ti, Zr, W, Nb, Ta, and especially of Al. Lithium titanate is a possible source of titanium. Examples of dopants are $MgO$, $Mg(OH)_2$, $TiO_2$ selected from rutile and anatase, anatase being preferred, furthermore basic titania such as $TiO(OH)_2$, furthermore $Li_4Ti_5O_{12}$, $ZrO_2$, $Zr(OH)_4$, $Li_2ZrO_3$, $Nb_2O_3$, $Ta_2O_5$, $Li_2WO_4$, $WO_3$, $MoO_3$, $Li_2MoO_4$, $Al(OH)_3$, $Al_2O_3$, $Al_2O_3 \cdot aq$, and $AlOOH$. Preferred are Al compounds such as $Al(OH)_3$, $\alpha\text{-}Al_2O_3$, $\gamma\text{-}Al_2O_3$, $Al_2O_3 \cdot aq$, and $AlOOH$, and $TiO_2$ and $Zr(OH)_4$. Even more preferred dopants are $Al_2O_3$ selected from $\alpha\text{-}Al_2O_3$, $\gamma\text{-}Al_2O_3$, and most preferred is $\gamma\text{-}Al_2O_3$.

In a preferred embodiment, dopant(s) is/are applied in an amount of up to 2.5 mole %, referring to TM, preferably 0.1 up to 1.5 mole %.

In one embodiment of the present invention, the molar ratio of lithium and of precursor and, if applicable, dopants, Li/[TM + dopant] is selected to be in the range of from 0.95 to 1.2, and in the case of electrode active materials with more than 50 % nickel it is preferably in the range of from 0.99 to 1.05.

A manufacturing unit in the context of the present invention is a unit in which a precursor of an electrode active material and a source of lithium are converted into an electrode active material, and, optionally, performs a post-treatment selected from coating or washing and drying. Manufacturing units include a vessel in which step (d) may be carried out, for example a rotary kiln, a roller hearth kiln, or a pusher kiln, or a box furnace or a tube furnace or combinations of at least two of the aforementioned.

In one embodiment of the present invention, step (d) refers to a manufacture in commercial scale, for example 10 tons per day or more.

In one embodiment of the present invention, step (d) refers to a high-throughput lab manufacturing of materials, producing small quantities of materials for different process conditions (b). Batch sizes may range from 0.5g to 100g, preferably from 3g - 30g. Throughput may be in a range from 5 - 500 materials per day, preferably from 10 - 100 materials per day.

Step (e) includes obtaining electrode active material sample(s) generated from a manufacturing process with predetermined process parameters in accordance with (b). Said set of parameters fits into the specification according to step (a).

One or more samples are obtained from said electrode active material, for example with a robot. In embodiments wherein a saggar or an open cup or a crucible is used for manufacture of said electrode active material, it is advantageous to take several samples of the same saggar or an open cup or a crucible, respectively, in order to eliminate misleading results due to inhomogeneities in said saggar or an open cup or a crucible, respectively. In an alternative embodiment, it is possible to perform mixing of the electrode active material, and to then take one sample.

In one embodiment of the present invention, two samples of from 10 mg to 10 g, preferably 20 mg to 5 g and even more preferably 100 mg to 2 g per saggar, crucible or open cup to be analyzed, or per defined period of time, respectively, are taken. Said samples are withdrawn from different locations of the respective saggar, crucible or open cup to ensure that not only material from the surface but also from the inner part of the loading of such saggar, crucible or open cup is analyzed. In embodiments wherein a rotary kiln is used in the manufacture of the electrode active material, such samples are taken per defined period of time, for example every two hours or every 5 hours.

In a preferred embodiment of the present invention, a robot is used for taking such samples. In one embodiment of the present invention, the robot takes 2 to 10 samples per saggar, crucible or open cup to be analyzed, or per defined period of time, respectively, preferably 3 to 5. The more samples are taken the more it is ensured that the samples provide a representative average of the overall loading. However, if too many samples are taken too much electrode material is spent for analyses.

Although it is possible to have the robot take samples from each saggar, crucible or open cup, respectively, it is preferred to not analyze each and every saggar, crucible or open cup. For example, in many embodiments it is sufficient to have the robot take samples from one out of every 5 to 12 saggars, crucible or open cup per production run. In particular, when certain trends in synthesis performance are tracked, such a number of samples is generally sufficient. In other embodiments, for example in embodiments where manufacture of the electrode active material is carried out in a rotary kiln, it is preferred to have the robot take samples after a certain time period, for example every 20 minutes up to every 12 hours, or preferably every 30 minutes up to every 6 hours.

The robot may assign numbers to the combined samples taken from each saggar, crucible or open cup to be analyzed and may then combine such number with the respective number of the saggar, crucible or open cup, respectively, to enable tracing a sample with a saggar, crucible or open cup.

Step (f) includes performing measurements on sample(s) taken in step (e) to determine the properties as specified in step (a). This refers to the at least three properties as defined. In one embodiment, more than three properties of said electrode active material are determined, for example four to six. Analytic methods have been defined above.

In a preferred embodiment, steps (e) and (f) are performed by a robot. This implies a combination of two or more robots, or a single robot, or several parts of a single robot. In particular, in step (d), a robot can take the samples with a robotic arm that holds device such as a spatula, a spoon-shaped instrument or the like for taking said samples.

In a preferred embodiment of step (e), the robot transfers the sample(s) from step (e) to another robot or to another part of itself where the respective robot performs measurements or makes the respective preparative measures. In the context of the present invention and unless specifically indicated otherwise, there will not be made any distinction between said "another part" of the same robot that collects sample(s) from of the same saggar, crucible or open cup, and second and thus different robot that carries out the measurements.

In one embodiment of the present invention, the model is based on machine learning. Machine learning models are trained on historical data - examples of model inputs and desired model outputs - and they are often capable of learning complicated nonlinear relationships. For regression tasks, in which the model predictions of the electrode active material specifications in accordance with step (a) are continuous numbers, commonly used models are tree-ensembles such as random forests, kernel-based methods such as support vector machines and Gaussian processes, and artificial neural networks.

In an - optional - step (e1), certain measurements are performed during step (d) that relate to the process and that are not directly termed process parameters but relevant to the process in accordance to step (e). Examples are the composition of the atmosphere or the off-gas during calcination with respect to, e.g., humidity and $CO_2$ content, and temperature within a loaded saggar, or crucible.

In one embodiment of the present invention, process parameters mentioned in, but not limited those of step (b), are continuously or discontinuously measured by sensors during the process according to step (e) and transferred to a process control system of the manufacturing process. In one embodiment of the present invention, those process parameters are stored in a relational database, for example a PostgreSQL database.

In one embodiment of the present invention the electrode active material properties and the process conditions are retrieved from a relational database, such as a PostgreSQL database, to generate the process model.

Step (f) includes providing results from step (e) to a processing device, for example selected results or the complete results.

In one embodiment of the present invention, said processing device adds results from step (f) to the model of step (c). It is preferred to only add those results to the model of step (c) that extend the frame of the model, and to not add data that are merely repetitive within experimental error.

In one embodiment of step (g) analytical results from step (f) are analyzed automatically by a processing device to retrieve the necessary material properties of step (a). This analysis process may include steps data transfer, data conversion, data filtering, fitting of models to the data. In another embodiment of step (g) the analytical results from step (e) are automatically analyzed by a processing device to retrieve the necessary material properties of step (a) by applying a machine-learning model that was pre-trained.

Step (h) includes determining the difference between target specification in accordance with (a) and sample measurements according to (f). In particular, step (g) includes to compare the results of the measurements of step (f) to the desired results in accordance with step (a) preferably by said processing device in one or more steps.

In one embodiment of the present invention, the entire documentation of step(s) (h) is performed by a processing device, and the results of electrochemical tests are compared to the desired results by a processing device. In this context, "desired results" refers to the specified properties of step (a). In a preferred embodiment, said processing device sends an electronic signal to a production control function in case at least two consecutive samples show a negative deviation from the desired results. In this context, a negative deviation may mean too high an acid consumption and thus too high a residual lithium content, or too strong a deviation of any of the metals, each by at least 1 to 5% of the specified value, preferably at least 1 to 2% in case of electrochemical data and even up to 5% with respect to BET surface, if applicable.

In one embodiment of the present invention, said processing device collects data as input through an input channel and provides an electronic signal via an output channel to a production control function in case at least two consecutive samples show a significant deviation from the desired results. The term "significant" is related to experimental error. Although it is possible to already provide an electronic signal if only a single sample shows a significant deviation from the desired results and from the specification in accordance with step (a) it is advantageous to eliminate artefacts.

In one embodiment of the present invention, said processing device collects data as input through an input channel and provides an electronic signal via an output channel to a production control function in case already one sample shows a significant deviation from the desired results, and as a result the frequency of drawing samples and analyzing is increased.

Step (i) includes refining the model from step (c). Such a refinement is required if the sample measurements from step (f) do not fit into the model from step (c). Such refinement may include an extrapolation or interpolation or correction and adjustment of parameters of the model according to step (c). Thus, the refinement is based on the difference of target specification according to (a) and sample measurements according to (f),

Step (j) includes deriving new process parameters from the refined model according to (i) for example a reduction or increase of the calcination temperature, or an increase or reduction of the residence time of the mixture of precursor and source of lithium in the calcination oven.

In one embodiment of the present invention step (j) is done with gradient-based or gradient-free numerical optimization routines such as L-BFGS or Nelder-Mead. Such optimization routines are implemented for example in freely available software packages written in program languages like Python or R.

Step (j) may as well generate information that indicate or predict malfunction of certain parts or units of the manufacturing process derived from temporal trends or drifts in relations between process conditions (b) and material properties (a).

Step (k) includes providing an electronic signal based on new process parameters of step (j) to a production control function in the manufacturing unit of the device where said electrode active material is made.

The decision caused by step (k) may be double-checked by an operator.

Data storage (a-k), model generation (c), model refinement (i), optimization (j) and process control (k) may take place on the same processing device or on different processing devices.

In one embodiment of the present invention the data is stored one processing device and only the necessary parts are transferred to another processing device for the purpose of model training (c), model refinement (i), optimization (j) or process control (k).

In one embodiment of the present invention processing devices refer to cloud (computing) environments.

In one embodiment of the present invention the data is encrypted before transferring from one processing device to another. Data may be encrypted for example to hide the true nature of the data for the purpose of model generation (c), model refinement (i) or optimization (j).

By performing the inventive process, production processes of electrode active materials may be adapted very quickly during upscaling and whenever a deviation from the target specification occurs. Thus, the improvement cycles are accelerated and less off-spec material is produced.

A further aspect of the present invention is directed to a set-up, hereinafter also referred to as inventive set-up. The inventive set-up comprises

(A) a unit in which a precursor of an electrode active material and a source of lithium are converted into an electrode active material, and, optionally, performs a post-treatment selected from coating or washing and drying, said unit also being referred to as "manufacturing unit",

(B) a machine that transfers one or more samples of electrode active material, for example a synthesis robot,

(C) analytical instruments that perform measurements on the samples that are related to the specified parameters of said electrode active material,

(D) a processing device,

(E) a model that connects process parameters for making electrode active materials and process parameters and that is stored in processing device (D).

In one embodiment of the present invention, the inventive set-up further comprises a processing device that collects data as input through an input channel and provides an electronic signal via an output channel to a production control function in unit (A) in case a sample shows a significant deviation from the desired results in at least one measurement. The threshold of the deviation to be significant is advantageously stored in the processing device.

Unit (A) comprises an apparatus for mixing precursor and source of lithium and, if applicable, any dopant or processing aid, for example a flux agent, and at least one device for performing a calcination, thus, heating to temperatures of from 600 to 1000°C. Examples are ovens, for example rotary kilns, rotary hearth kilns, pusher kilns, box furnaces, tube furnaces, and pendulum kilns, and combinations of at least two of the aforementioned. Unit (A) may additionally comprise at least one oven for heating to 150 to 450°C, for example a rotary kiln. Unit (A) may additionally comprise a sub-unit for performing an after-treatment, for example washing and drying the freshly manufactured electrode active material, for example a vessel together with a filter, for example a press filter or a stirred filter device.

Examples of analytical instruments (C) are X-ray diffractometers, apparatuses that perform a Karl-Fischer titration, a determination of the specific surface according to BET, scanning electron microscopes, and the like.

Examples of processing devices (D) are computers. Examples of models (E) are disclosed in the context of step (c).

In one embodiment of the present invention, the inventive set-up further comprises a processing device that collects data as input through an input channel and provides an electronic signal via an output channel to a production control function in unit (A) in case at least two consecutive samples show a significant deviation from the desired results in at least one measurement.

The current invention is illustrated by working examples.

Preparation work: Manufacture of a precursor

A stirred tank reactor was filled with deionized water and 49 g of ammonium sulfate per kg of water. The solution was tempered to 55 °C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in an average residence time of 8 hours. The transition metal solution contained Ni, Co and Mn at a molar ratio of 8:1:1 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped. The mixed transition metal (TM) oxyhydroxide precursor TM-OH.1 was obtained by filtration of the resulting suspension, washing with distilled water, drying at 120°C in air and sieving. The average particle diameter (D50) was 10 $\mu$m.

In the following examples, a set-up was used that contained the following elements:

(A.1): a mixer in which a precursor was mixed with LiOH·$H_2$O and dopants ($Al_2O_3$, $TiO_2$, $Zr(OH)_4$), and a box furnace with multiple crucibles
(B.1) a synthesis robot that can take samples from saggars
(C.1) to (C.3): commercially available analytics machines for
(D.1) a computer in which models (E.1) or (E.2), respectively, are stored

Example 1: $Li_{1+x}(Ni_{0.8}Co_{0.1}Mn_{0.1})_{1-x}O_2$ with $-0.02 \leq x \leq + 0.04$ with Ti and/or Zr and/or Al doping

TM: metals other than Li

Step (a.1): SEM primary particle size less than 0.35 $\mu$m, residual lithium (determined as LiOH) less than 0.72 wt%.
Coin half cell Coulombic efficiency (1st cycle) > 0.88
Coin half cell discharge capacity ($30^{1h}$ cycle) [mAh/g] > 175
Coin half cell discharge capacity ($30^{1h}$ cycle) [mAh/g] > 170
Coin half cell 10th cycle discharge capacity retention [%] > 96
Lattice parameter [Ångstrom] < 2.97
Unit cell volume of post treated material [Angstrom square] < 101.21

Step (b.1): The following process parameter were provided: molar ratio Li/TM ratio, pre-calcination temperature:

calcination top temperature between 780°C to 800°C,
molar Li/TM input: 1.03 - 1.07
precursor composition formally $(Ni_{0.8}Co_{0.1}Mn_{0.1})(OH)_2$
precursor average diameter (D50) 12 $\mu$m.

Step (c.1): From various experimental results on laboratory scale, for example with 20 g samples, see Table 1, a regression model of relationship was built between properties of step (a.1) and process parameters according to (b.1) with response surface model (model includes single, quadratic terms and interaction terms) using the commercially available software JMP, which is a statistical analysis software tool. It is possible to award so-called desirability factor for each target parameter and thus giving certain parameters a higher desirability than others. It is thus possible to calculate the best perform combination of process parameters from the model so developed.

P-CAM.1: TM-OH.1 pre-calcined at 350°C for 1 hour
P-CAM.2: TM-OH.1 pre-calcined at 400°C for 1 hour
P-CAM.3: TM-OH.1 pre-calcined at 450°C for 1 hour

Table 1: Experiments that were basis for the model

| Experiment | precalcalci-ned P-CAM | Li/TM input | Dopants | Calcination top T [°C] | Calcination profile steps |
|---|---|---|---|---|---|
| 1 | P-CAM.1 | 1.03 | 0.17% Zr, 0.17% Ti | 800 | 2 |
| 2 | | 1.03 | 0.17% Zr, 0.17% Ti | 780 | 1 |
| 3 | | 1.03 | 0.25% Zr, 1% Al | 780 | 2 |
| 4 | | 1.03 | 0.25% Zr, 1% Al | 800 | 1 |
| 5 | | 1.05 | 0.17% Zr, 0.17% Ti | 780 | 2 |
| 6 | | 1.07 | 0.17% Zr, 0.17% Ti | 800 | 1 |
| 7 | | 1.07 | 0.17% Zr, 0.17% Ti | 790 | 2 |
| 8 | | 1.07 | 0.25% Zr, 1% Al | 800 | 2 |
| 9 | | 1.07 | 0.25% Zr, 1% Al | 780 | 1 |
| 10 | P-CAM.2 | 1.03 | 0.17% Zr, 0.17% Ti | 790 | 2 |
| 11 | | 1.05 | 0.17% Zr, 0.17% Ti | 790 | 1 |
| 12 | | 1.05 | 0.17% Zr, 0.17% Ti | 800 | 2 |
| 13 | | 1.05 | 0.25% Zr, 1% Al | 790 | 2 |
| 14 | | 1.05 | 0.25% Zr, 1% Al | 790 | 2 |
| 15 | | 1.05 | 0.25% Zr, 1% Al | 790 | 1 |
| 16 | | 1.07 | 0.17% Zr, 0.17% Ti | 780 | 2 |
| 17 | P-CAM.3 | 1.03 | 0.17% Zr, 0.17% Ti | 800 | 1 |
| 18 | | 1.03 | 0.17% Zr, 0.17% Ti | 780 | 2 |
| 19 | | 1.03 | 0.25% Zr, 1% Al | 800 | 2 |
| 20 | | 1.03 | 0.25% Zr, 1% Al | 780 | 1 |
| 21 | | 1.05 | 0.17% Zr, 0.17% Ti | 790 | 2 |
| 22 | | 1.07 | 0.17% Zr, 0.17% Ti | 780 | 1 |
| 23 | | 1.07 | 0.17% Zr, 0.17% Ti | 800 | 2 |
| 24 | | 1.07 | 0.25% Zr, 1% Al | 780 | 2 |

Table 2: Analytical results

| Sample | BET (m$^2$/g) | LiOH [wt%] | I Li$_2$CO$_3$ [wt%] | Disorder in Li-layer | Lattice paramter a [A] | Lattice paramter c [Å] | Unit cell volume [(Å)$^3$)] | Crystallite size [nm] |
|---|---|---|---|---|---|---|---|---|
| 1 | 0.71 | 0.44 | 0.44 | 1.6 | 2.873 | 14.206 | 101.54 | 96 |
| 2 | 0.61 | 0.40 | 0.48 | 2.2 | 2.873 | 14.206 | 101.56 | 81 |
| 3 | 0.10 | 0.44 | 0.59 | 1.7 | 2.872 | 14.201 | 101.42 | 93 |
| 4 | 0.07 | 0.32 | 0.60 | 1.4 | 2.872 | 14.202 | 101.46 | 115 |
| 5 | 0.41 | 0.45 | 0.60 | 1.3 | 2.872 | 14.202 | 101.47 | 88 |
| 6 | 0.56 | 0.39 | 0.66 | 1.1 | 2.871 | 14.198 | 101.35 | 112 |
| 7 | 0.48 | 0.48 | 0.61 | 0.7 | 2.870 | 14.198 | 101.30 | 99 |
| 8 | 1.59 | 0.38 | 0.57 | 0.5 | 2.870 | 14.199 | 101.28 | 103 |
| 9 | 2.52 | 0.39 | 0.37 | 0.9 | 2.871 | 14.198 | 101.32 | 101 |
| 10 | 2.30 | 0.36 | 0.21 | 2.9 | 2.872 | 14.204 | 101.49 | 88 |
| 11 | 0.63 | 0.40 | 0.44 | 0.8 | 2.871 | 14.200 | 101.35 | 104 |
| 12 | 1.22 | 0.38 | 0.40 | 1.2 | 2.871 | 14.199 | 101.34 | 97 |
| 13 | 0.13 | 0.50 | 0.23 | 0.8 | 2.871 | 14.201 | 101.34 | 112 |
| 14 | 0.30 | 0.42 | 0.47 | 1.2 | 2.870 | 14.200 | 101.31 | 93 |
| 15 | 0.47 | 0.34 | 0.51 | 1.1 | 2.870 | 14.197 | 101.27 | 101 |
| 16 | 0.80 | 0.48 | 0.37 | 0.6 | 2.870 | 14.197 | 101.25 | 87 |
| 17 | 0.60 | 0.34 | 0.28 | 1.8 | 2.871 | 14.199 | 101.39 | 90 |
| 18 | 0.75 | 0.47 | 0.15 | 1.3 | 2.872 | 14.203 | 101.45 | 96 |
| 19 | 0.28 | 0.47 | 0.22 | 1.1 | 2.871 | 14.202 | 101.35 | 97 |
| 20 | 0.74 | 0.40 | 0.17 | 1.4 | 2.871 | 14.201 | 101.34 | 90 |
| 21 | 0.55 | 0.41 | 0.20 | 1.0 | 2.870 | 14.198 | 101.30 | 101 |
| 22 | 0.83 | 0.39 | 0.24 | 0.5 | 2.870 | 14.198 | 101.27 | 107 |
| 23 | 0.63 | 0.37 | 0.38 | 0.5 | 2.869 | 14.194 | 101.18 | 106 |
| 24 | 0.49 | 0.41 | 0.32 | 0.6 | 2.868 | 14.195 | 101.13 | 101 |

Table 3: Electrochemistry data:

| Sample | Coulombic efficiency (first cycle) [%] | Coin half cell 30th discharge capacity [mAh/g] | Coin half cell 50th discharge capacity [mAh/g] | Coin half cell 10th discharge capacity divided by first discharge capacity [%] |
|---|---|---|---|---|
| 1 | 87.9 | 180.4 | 175.4 | 99.6 |
| 2 | 86.1 | 181.9 | 178.2 | 100.7 |
| 3 | 86.0 | 177.6 | 174.3 | 100.4 |
| 4 | 88.5 | 176.6 | 171.7 | 99.2 |
| 5 | 87.7 | 181.3 | 175.9 | 99.7 |
| 6 | 88.5 | 180.4 | 175.8 | 99.7 |
| 7 | 87.4 | 181.8 | 179.1 | 100.7 |
| 8 | 88.9 | 177.2 | 173.3 | 99.3 |

(continued)

| Sample | Coulombic efficiency (first cycle) [%] | Coin half cell 30th discharge capacity [mAh/g] | Coin half cell 50th discharge capacity [mAh/g] | Coin half cell 10th discharge capacity divided by first discharge capacity [%] |
|---|---|---|---|---|
| 9 | 86.8 | 178.1 | 175.2 | 100.2 |
| 10 | 87.4 | 183.3 | 179.5 | 100.2 |
| 11 | 87.2 | 182.0 | 178.8 | 100.4 |
| 12 | 89.5 | 180.3 | 176.4 | 99.4 |
| 13 | 87.7 | 179.7 | 176.9 | 100.0 |
| 14 | 88.9 | 178.9 | 176.4 | 99.8 |
| 15 | 87.7 | 179.4 | 177.1 | 100.2 |
| 16 | 87.7 | 179.9 | 177.7 | 100.3 |
| 17 | 90.2 | 180.8 | 176.8 | 99.2 |
| 18 | 87.4 | 181.8 | 178.9 | 100.2 |
| 19 | 89.8 | 178.0 | 175.1 | 99.4 |
| 20 | 86.7 | 179.2 | 176.7 | 100.3 |
| 21 | 88.5 | 181.7 | 178.9 | 99.9 |
| 22 | 91.2 | 182.3 | 171.9 | 98.5 |
| 23 | 91.6 | 187.2 | 179.1 | 99.0 |
| 24 | 99.0 | 170.4 | 164.2 | 98.9 |

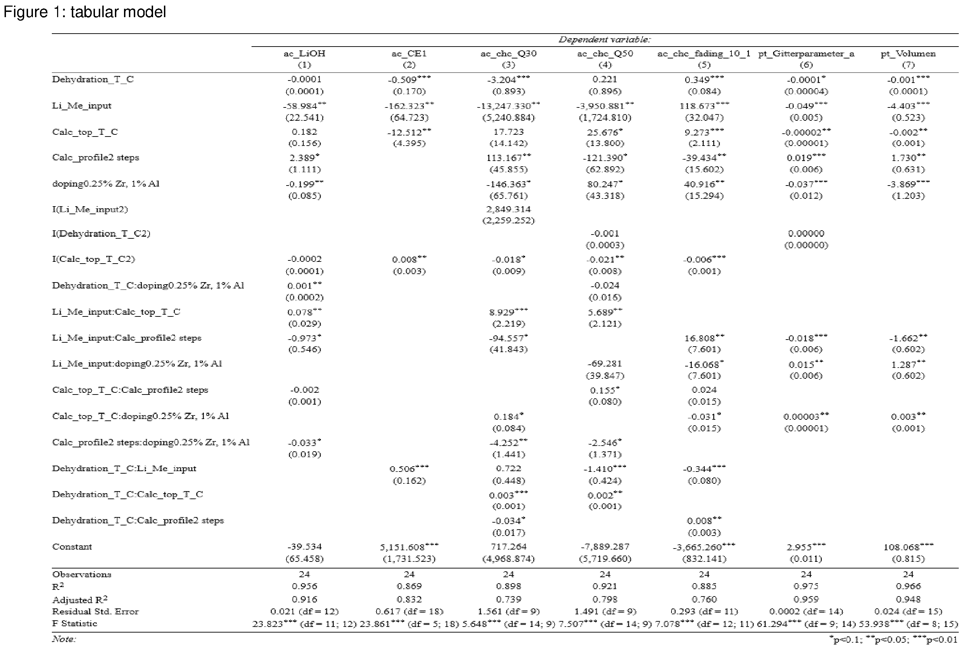

The model (E.1) developed is annexed as Figure 1. It is stored in computer (D.1).

Step (d.1): In order to execute experiments according to step (c.1): LiOH and P-CAM.3 were mixed in a molar ratio Li/TM = 1.07:1, and 1 mol-% of $Al_2O_3$ and 0.25 mol% $Zr(OH)_4$ were added. Calcination was performed in box furnace (A.1) at 800 °C for 6 hours. Then, the resultant mixture was cooled to ambient temperature. An electrode active material was obtained, hereinafter also referred to as CAM.1.

Step (e.1): With synthesis robot (B.1), samples from electrode active material from step (d.1) are taken and an aliquots distributed within a test units that performs for further analysis.

(step f.1) A sample taken in step (e.1) is transferred to a test unit that prepares the sample for SEM analysis, and performs the SEM analysis itself, (C.1). SEM image is taken with 2000 to 20000 magnification. Primary particles are segmented using deep learning model, using python - open computer vision ("cv") package. Primary particle size values are calculated by taking median value of each segmented particles' diameter. In addition, further aliquots were used for X-Ray diffraction measurements in (C.2), Karl-Fischer titration (C.3) and a coin cell.

Step (g.1): Experimental results from step (f.1) were stored in a PostgreSQL database. To obtain the crystallographic properties shown in table 2a the measured diffractograms (Intensity vs. diffraction angle) were subjected to an automated Rietveld refinement routine and stored in a PostgreSQL database. The electrochemical properties shown in table 3 were obtained from an automated analysis routine of the batteries time-series data (time, current, voltage). The following results were obtained, see Table 4a.

Table 4a: Analytical results of CAM.1

| Sample | BET ($m^2$/g) | LiOH [wt%] | $Li_2CO_3$ [wt%] | Disorder in Li-layer | a [Å] | c [Å] | Unit cell volume [(Å)$^3$)] | Crystallite size [nm] |
|---|---|---|---|---|---|---|---|---|
| CAM.1 | 0.38 | 0.38 | 0.21 | 0.6 | 2.869 | 14.197 | 101.20 | 114 |
| "a" and "c" are lattice parameters | | | | | | | | |

Table 4b: Electrochemistry results

| Sample | IRdrop_1C | Qch_0.1C | Qdch_0.1C | CE1 | chc_Q50 (%) | R50_chc (%) |
|--------|-----------|----------|-----------|------|-------------|-------------|
| 1 | 17.2 | 228.1 | 208.3 | 91.3 | 90.1 | 260.3 |
| 2 | 17.9 | 226.7 | 206.1 | 90.9 | 88.5 | 256.1 |
| 3 | 15.6 | 224.8 | 201.9 | 89.8 | 92.6 | 232.7 |
| 4 | 18.2 | 228.5 | 209.1 | 91.5 | 87.9 | 259.7 |
| 5 | 15.9 | 229.2 | 207.9 | 90.7 | 92.5 | 229.7 |
| 6 | 12.8 | 226.6 | 212.1 | 93.6 | 89.9 | 272.5 |
| 7 | 14.2 | 223.8 | 205.1 | 91.6 | 95.5 | 214.4 |
| 8 | 12.5 | 225.5 | 207.5 | 92.0 | 94.2 | 237.4 |
| 9 | 18.2 | 224.8 | 207.9 | 92.5 | 89.6 | 216.3 |
| 10 | 18.0 | 228.2 | 211.5 | 92.7 | 83.6 | 261.7 |
| 11 | 14.5 | 228.2 | 211.7 | 92.8 | 93.2 | 238.8 |
| 12 | 17.4 | 226.2 | 211.3 | 93.4 | 87.7 | 274.1 |
| 13 | 15.2 | 225.6 | 205.8 | 91.2 | 95.7 | 245.7 |
| 14 | 29.6 | 238.6 | 207.7 | 87.3 | 93.2 | 202.9 |
| 15 | 16.2 | 228.5 | 209.1 | 91.5 | 90.0 | 217.8 |
| 16 | 19.9 | 227.3 | 207.5 | 91.3 | 95.5 | 206.0 |
| 17 | 20.3 | 231.2 | 213.6 | 92.4 | 86.8 | 259.2 |
| 18 | 25.8 | 229.5 | 206.7 | 90.1 | 95.6 | 217.0 |
| 19 | 20.6 | 226.3 | 205.4 | 90.8 | 95.5 | 218.8 |
| 20 | 18.2 | 229.4 | 208.0 | 90.7 | 92.3 | 209.2 |
| 21 | 15.8 | 229.3 | 210.2 | 91.7 | 93.5 | 247.3 |
| 22 | 19.5 | 225.2 | 207.5 | 92.1 | 90.0 | 281.7 |
| 23 | 17.2 | 230.6 | 208.3 | 90.4 | 92.2 | 246.0 |
| 24 | 11.5 | 222.1 | 205.7 | 92.6 | 96.1 | 219.4 |

Step (g.1):

The data from Table 4a were provided to a computer through an input channel.

Step (h.1):

The computer determined the difference between target specification in accordance with (a.1) and sample measurements according to (f.1). The sum of residual lithium was found to be 0.59% by weight and thus met the specification by 0.13%.
Coin half cell Coulombic efficiency (1st cycle) > 0.88 (measured: 0.883)
Coin half cell discharge capacity (30$^{1h}$ cycle) [mAh/g] > 175 (measured 176)
Coin half cell discharge capacity (30$^{1h}$ cycle) [mAh/g] > 170 (measured: 173)
Coin half cell 10th cycle discharge capacity retention [%] > 96 Coin half cell 10th cycle discharge(measured 99.5%)
Step (i.1): If required, the model of step (c.1) is refined. In this case, it was how much the measured material properties from step (f.1) and the prediction from the model of step (c.1) were in agreement, and in the case of poor agreement, the model was extended or completely corrected. In this example, the model was a polynomial function of the process parameters and can easily be extended by adding higher-order terms. Alternatively, one has the option of using machine learning models more capable of describing nonlinear and discontinuous behavior.
The comparison of step (h.1) shows that the material proposed by the model of step (c.1), which was subsequently synthesized and analyzed, satisfies the target specification of step (a.1) so potentially no additional optimization was required. However, if required, it is possible to proceed to improve the material further to ensure that, e.g., random variations in production quality are unlikely to affect fulfillment of the target specification. New process parameters are derived using gradient-based numerical optimization and the refined model of step (i.1) to find process conditions at which the predicted material properties satisfy the target specification.

Step (j.1): from the data obtained, foreseeing a calcination temperature of 800°C subsequently to pre-calcination at 450°C, and a Li/TM input of 1.07, a doping with 0.25% by weight of Zr and 1% by weight of Al

Step (k.1) The process parameters proposed in step (j,1) are sent electronically to a production control function in the manufacturing unit allowing production of the newly proposed material.

Example 2:

In contrast to the previous example, example 2 starts with a small initial set of experiments to generate a coarse process model, step (c.2), and then iteratively improves the process model (E) based on experiments newly proposed and performed, until an electrode active material is obtained that fulfills all target specifications.

Step (a.2): The following target specification was provided:

primary particle size from SEM < 300 nm,
residual LiOH < 0.9wt%,
disorder from x-ray diffraction < 2%.
Electrochemical performance:

1st discharge capacity > 229 mAh/g,
1st cycle Coulombic efficiency > 89%,
Cell resistance (DCIR) after 120 cycles < 85 $\Omega$

Step (b.2): The following process parameter were provided:

P-CAM (D50): 4 to 12 $\mu$m
Li/TM input: 0.98 to 1.04
Calcination temperature. 680 to 720°C

Step (c.2): From various experimental results on laboratory scale, for example with 20 g samples, see Table 5, a regression model of relationship was built between properties of step (a.2) and process parameters according to (b.2) with response surface model (model includes single, quadratic terms and interaction terms) using the commercially available software JMP, which is a statistical analysis software.

Step (d.2): The following experiments were conducted:

Table 5: experimental parameters

| Experiment No. | (D50) [μm] | Li/TM molar ratio | T / °C |
|---|---|---|---|
| CAM.2.1 | 10 | 0.98 | 690 |
| CAM.2.2 | 8 | 1.03 | 680 |
| CAM.2.3 | 4 | 1.01 | 720 |
| CAM.2.4 | 12 | 1.00 | 700 |

Step (e.2): With a synthesis robot, samples from electrode active material from step (d.2) are taken and an aliquot distributed within a test unit that performs sample preparation for SEM analysis. Other samples are similarly taken for different analysis techniques.

Step (f.2): the SEM analysis itself is taken with 1000 to 20000 magnification. Primary particles are segmented using deep learning model, using python - open cv package. Primary particle size values are calculated by taking median value of each segmented crystallite diameter. In addition, further aliquots were used for X-Ray diffraction measurements, Karl-Fischer titration and a coin cell preparation. The results obtained for the samples given above are shown in Table 6:

Table 6: Results of experiment (d.2)

| Experiment No. | Qdis (mAh/g) | CE (%) | DCIR (Ω) | LiOH (wt%) | Li/Ni Disorder (%) | crystallite size (nm) |
|---|---|---|---|---|---|---|
| CAM.2.1 | 223.2 | 87.7 | 118.8 | 0.88 | 2.9 | 233 |
| CAM.2.2 | 229.9 | 89.5 | 77.7 | 0.90 | 1.1 | 266 |
| CAM.2.3 | 222.5 | 87.0 | 61.9 | 0.75 | 1.8 | 418 |
| CAM.2.4 | 223.1 | 86.4 | 112.0 | 0.85 | 1.7 | 306 |

Step (g.2): All data is transferred to a computer-based database.

Step (h.2): the computer compares the data obtained and the model including the target specification. The results are shown in Table 7. Specifically, Table 7 shows the relative difference of the individual values from the target specification (a.2), with negative values indicating that target specifications were not met. None of the 4 initial production trials met all target specifications.

Table 7: comparison of results obtained with target specification

| Experiment No. | ΔQdis | ΔCE (%) | ΔDCIR | ΔLiOH | ΔDisorder | ΔParticle |
|---|---|---|---|---|---|---|
| CAM.2.1 | -2.5% | -1.5% | -48% | 2.3% | -43.9% | 22.4% |
| CAM.2.2 | 0.4% | 0.6% | 3% | -0.4% | 46.9% | 11.5% |
| CAM.2.3 | -2.8% | -2.3% | 23% | 16.6% | 11.6% | -39.3% |
| CAM.2.4 | -2.6% | -2.9% | -40% | 5.3% | 15.3% | -2.1% |

In order to achieve a material that fulfills all specifications (a.2) a process model was obtained based on the 4 initial experiments and implemented the following routine.

The tables 8 and 9 show the optimized process conditions and the corresponding obtained results of the material analysis. A material fulfilling all target specifications was achieved after 4 (CAM.2.7) iterations of the abovementioned routine. An additional optimization cycle (CAM.2.8) lead to a material that was again out of spec, therefore conditions for Experiment CAM.2.7 are considered as local optimum for the process.

Table 8: Results of iterations

| Experiment No. | (D50) [μm] | Li/TM ratio | Calcination T / °C |
|---|---|---|---|
| CAM.2.5 | 9 | 1.04 | 680 |
| CAM.2.6 | 6 | 0.98 | 680 |
| CAM.2.7 | 4 | 1.04 | 685 |
| CAM.2.8 | 4 | 1.02 | 683 |
| CAM.2.9 | 4 | 1.04 | 680 |

Table 8 (continued)

| Experiment No. | Qdis (mAh/g) | CE (%) | DCIR (Ω) | LiOH (wt%) | Disorder (%) | Particle size (nm) |
|---|---|---|---|---|---|---|
| CAM.2.5 | 226.1 | 87.9 | 103.1 | 0.94 | 1.1 | 259 |
| CAM.2.6 | 225.3 | 89.0 | 95.4 | 0.79 | 2.9 | 238 |
| CAM.2.7 | 229.9 | 89.5 | 77.7 | 0.90 | 1.1 | 266 |
| CAM.2.8 | 229.1 | 89.3 | 79.4 | 0.83 | 1.7 | 252 |
| CAM.2.9 | 229.9 | 89.5 | 77.7 | 0.90 | 1.1 | 266 |

Table 9: Difference between target specification and measured performance (positive percentages indicate satisfaction of the target specification

| Experiment No. | Qdis (mAh/g) | CE (%) | DCIR (Ω) | LiOH (wt%) | Disorder (%) | Particle size (nm) |
|---|---|---|---|---|---|---|
| CAM.2.5 | -1.2% | -1.2% | -29% | -4.6% | 47.0% | 13.6% |
| CAM.2.6 | -1.6% | 0.0% | -19% | 12.0% | -44.3% | 20.7% |
| CAM.2.7 | 0.4% | 0.6% | 3% | -0.4% | 46.9% | 11.5% |
| CAM.2.8 | 0.0% | 0.3% | 1% | 7.6% | 15.9% | 16.0% |
| CAM.2.9 | 0.4% | 0.6% | 3% | -0.4% | 46.9% | 11.5% |

Step (h.2): using the commercially available software JMP, which is a statistical analysis software, a Gaussian process model, which predicts performance for unseen process conditions using a kernel function that encodes similarity to previously observed data. The implementation in the DiceKriging package for the R language was used. The free kernel parameters in the model were found by minimizing the negative marginal log-likelihood with respect to those free parameters. The covariance function, or kernel, was a Matern function with the smoothness parameter v (Greek nu) set to 3/2 to ensure differentiability. The model implementation was from the freely available DiceKriging package for the R language. In this example there are 6 target variables. As a result, 6 models were trained, each with the three process parameters of step (b.2) as input features and one of the target variables as output.

In more detail:

The L-BFGS algorithm was used to minimize an objective function with respect to the process parameters of step (b.2). The objective function combines the target specification with the model predictions and has low values where the target specification is predicted to be satisfied, and high values where the predicted performance does not satisfy the target specification. The target specification can be encoded with hard or soft constraints depending on the severity of failing to satisfy a goal and the type of optimization routine used. In this case, the objective function is given by the expression to be minimized in the equation

$$x_{opt} = \text{argmin}_x\ \Theta(s_i(y_i^{model}\ (x) - x_i\ y_i^{target})),$$

Where

$x_{opt}$ is the set of proposed process conditions, in this case a vector containing the particle size, lithium-to-transition metal ratio, and the calcination temperature,

$y_i^{model}\ (x)$ is the predicted value for the target variable number $i$ under process conditions,

$x_i\ y_i^{target})$ is the value of the target variable number $i$ used in the target specification,

$\Theta$ is a sigmoidal function returning values close to 1 when its argument is large positive and zero when its argument is large negative, and

the variable $s_i$ is +1 or -1 depending on whether the target variable number $i$ is required to have a value higher or lower than $y_i^{target}$.

For example, step (a.2) shows that the residual LiOH (wt%) value should be below 0.9%, so the corresponding $y_i^{target}$ value is 0.9 and the corresponding element of s is +1 to indicate that lower residual LiOH is better. This formulation changes in applications where variables are required to be close to a target value rather than above or below a threshold. The sigmoidal function $\Theta$ can include a gain parameter to tune the sharpness of the transition between low and high values and thus the optimizer's sensitivity to the transition between in-spec and off-spec performance with respect to the chosen target variable.

Step (i.2) refining

As soon as more data become available, for example when a measurement of one of the target variables included in step (a.2) is processed and made available, the corresponding model can be refined by appending the new information to the training data set and re-estimating the free parameters in the model. In this example the refinement is merely re-estimation of the model parameters without changes to the model structure.

Step (j.2). propose new process conditions based on the above model:
Process parameters essentially corresponding to CAM.2.7 are proposed.

Step (k.2): The proposed process settings generated by the optimization in step (j.2) are sent electronically to a production control function in the manufacturing unit of the device where new electrode active material is made according to the new process settings.

By the above sequence, a fast and reliable research may be performed.

**Claims**

**1.** Process for making an electrode active material comprising the steps of:

(a) providing a target specification containing at least three electrode active material properties selected from elemental composition, primary particle size, crystallite size, average secondary particle diameter (D50), particle diameter distribution, residual lithium content, specific surface area (BET), shape of secondary particles, lattice parameters, press density, tap density, electrochemical performance, and tap density,

(b) providing process parameters selected from calcination temperature, calcination duration, saggar loading, gas composition and gas flow, rotation speed, tilt angle, and composition of mixture to be subjected to calcination,

(c) providing a model of relationship between electrode active material properties in accordance with (a) and process parameters according to (b),

(d) manufacturing an electrode active material according to a process with parameters according to step (b) in a manufacturing unit,

(e) obtaining electrode active material sample(s) generated from manufacturing process (d),

(f) performing measurements on said sample(s) to determine the properties as specified in (a),

(g) providing results from step (f) to a processing device,

(h) determining the difference between target specification in accordance with (a) and sample measurements according to (f),

(i) refining the model from step (c),
(j) deriving new process parameters from the refined model according to (i), and
(k) providing an electronic signal based on new process parameters of step (j) to a production control function in the manufacturing unit.

**3.** Process according to claim 1 wherein steps (e) and (f) are performed by a robot.

**4.** Process according to claim 1 or 2 wherein steps (f) to (i) are performed automatically.

**5.** Process according to any of the preceding claims wherein steps (f) to (j) are performed in the same processing device.

**6.** Process according to any of the preceding claims wherein step (j) is performed by an output channel of a processing device.

**7.** Process according to any of the preceding claims wherein said processing device adds results from step (f) to the model of step (c).

**8.** Process according to any of the preceding claims wherein measurements are performed or added manually in addition to step (f).

**9.** Process according to any of the preceding claims wherein said model in step (c) includes post-treatment steps selected from water treatment and thermal treatment steps, and wherein in a subsequent step (k), an electronic signal is provided to a production control function in a post-treatment unit.

**10.** Process according to any of the preceding claims wherein said electrode active material is a particulate material according general formula $Li_{1+x}TM_{1-x}O_2$ with TM containing nickel and at least one metal other than nickel.

**11.** Process according to any of the preceding claims wherein said electrode active material is a particulate material according general formula $Li_{1+x}TM_{1-x}O_2$ with TM containing nickel and at least one of cobalt and manganese and, optionally, at least one of Mg, Al and Y or a transition metal selected from Ti, Zr, Nb, Ta, Fe, Mo, and W, and wherein x is in the range of from -0.02 to 0.3.

**12.** Set-up comprising

(A) a unit in which a precursor of an electrode active material and a source of lithium are converted into an electrode active material, and, optionally, performs a post-treatment selected from coating or washing and drying,
(B) a machine that transfers one or more samples of electrode active material,
(C) analytical instruments that perform measurements on the samples that are related to the specified parameters of said electrode active material,
(D) a processing device,
(E) a model that connects process parameters for making electrode active materials and process parameters and that is stored in processing device (D).

**13.** Set-up according to claim 11 further comprising a processing device that collects data as input through an input channel and provides an electronic signal via an output channel to a production control function in unit (A) in case a sample shows a significant deviation from the desired results in at least one measurement.

**14.** Set-up according to any of claims 11 or 12 further comprising a processing device that collects data as input through an input channel and provides an electronic signal via an output channel to a production control function in unit (A) in case at least two consecutive samples show a significant deviation from the desired results in at least one measurement.

# Figure 1: tabular model

| | ac_LiOH (1) | ac_CE1 (2) | ac_chc_Q30 (3) | ac_chc_Q50 (4) | ac_chc_fading_10_1 (5) | pt_Gitterparameter_a (6) | pt_Volumen (7) |
|---|---|---|---|---|---|---|---|
| | | | *Dependent variable:* | | | | |
| Dehydration_T_C | -0.0001 (0.0001) | -0.509*** (0.170) | -3.204*** (0.893) | 0.221 (0.896) | 0.349*** (0.084) | -0.0001* (0.00004) | -0.001*** (0.0001) |
| Li_Me_input | -58.984** (22.541) | -162.323** (64.723) | -13,247.330** (5,240.884) | -3,950.881** (1,724.810) | 118.673*** (32.047) | -0.049*** (0.005) | -4.403*** (0.523) |
| Calc_top_T_C | 0.182 (0.156) | -12.512** (4.395) | 17.723 (14.142) | 25.676* (13.800) | 9.273*** (2.111) | -0.00002** (0.00001) | -0.002** (0.001) |
| Calc_profile2 steps | 2.389* (1.111) | | 113.167** (45.855) | -121.390* (62.892) | -39.434** (15.602) | 0.019*** (0.006) | 1.730** (0.631) |
| doping0.25% Zr, 1% Al | -0.199** (0.085) | | -146.363* (65.761) | 80.247* (43.318) | 40.916** (15.294) | -0.037*** (0.012) | -3.869*** (1.203) |
| I(Li_Me_input2) | | | 2,849.314 (2,259.252) | | | | |
| I(Dehydration_T_C2) | | | | -0.001 (0.0003) | | 0.00000 (0.00000) | |
| I(Calc_top_T_C2) | -0.0002 (0.0001) | 0.008** (0.003) | -0.018* (0.009) | -0.021** (0.008) | -0.006*** (0.001) | | |
| Dehydration_T_C:doping0.25% Zr, 1% Al | 0.001** (0.0002) | | | -0.024 (0.016) | | | |
| Li_Me_input:Calc_top_T_C | 0.078** (0.029) | | 8.929*** (2.219) | 5.689** (2.121) | | | |
| Li_Me_input:Calc_profile2 steps | -0.973* (0.546) | | -94.557* (41.843) | | 16.808** (7.601) | -0.018*** (0.006) | -1.662** (0.602) |
| Li_Me_input:doping0.25% Zr, 1% Al | | | | -69.281 (39.847) | -16.068* (7.601) | 0.015** (0.006) | 1.287** (0.602) |
| Calc_top_T_C:Calc_profile2 steps | -0.002 (0.001) | | | 0.155* (0.080) | 0.024 (0.015) | | |
| Calc_top_T_C:doping0.25% Zr, 1% Al | | | 0.184* (0.084) | | -0.031* (0.015) | 0.00003** (0.00001) | 0.003** (0.001) |
| Calc_profile2 steps:doping0.25% Zr, 1% Al | -0.033* (0.019) | | -4.252** (1.441) | -2.546* (1.371) | | | |
| Dehydration_T_C:Li_Me_input | | 0.506*** (0.162) | 0.722 (0.448) | -1.410*** (0.424) | -0.344*** (0.080) | | |
| Dehydration_T_C:Calc_top_T_C | | | 0.003*** (0.001) | 0.002** (0.001) | | | |
| Dehydration_T_C:Calc_profile2 steps | | | -0.034* (0.017) | | 0.008** (0.003) | | |
| Constant | -39.534 (65.458) | 5,151.608*** (1,731.523) | 717.264 (4,968.874) | -7,889.287 (5,719.660) | -3,665.260*** (832.141) | 2.955*** (0.011) | 108.068*** (0.815) |
| Observations | 24 | 24 | 24 | 24 | 24 | 24 | 24 |
| $R^2$ | 0.956 | 0.869 | 0.898 | 0.921 | 0.885 | 0.975 | 0.966 |
| Adjusted $R^2$ | 0.916 | 0.832 | 0.739 | 0.798 | 0.760 | 0.959 | 0.948 |
| Residual Std. Error | 0.021 (df = 12) | 0.617 (df = 18) | 1.561 (df = 9) | 1.491 (df = 9) | 0.293 (df = 11) | 0.0002 (df = 14) | 0.024 (df = 15) |
| F Statistic | 23.823*** (df = 11; 12) | 23.861*** (df = 5; 18) | 5.648*** (df = 14; 9) | 7.507*** (df = 14; 9) | 7.078*** (df = 12; 11) | 61.294*** (df = 9; 14) | 53.938*** (df = 8; 15) |

*Note:* $p<0.1$; **$p<0.05$; ***$p<0.01$

Europäisches
Patentamt

European
Patent Office

Office européen
des brevets

# EUROPEAN SEARCH REPORT

Application Number

EP 20 21 2953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 561 923 A1 (SUMITOMO CHEMICAL CO [JP]; TANAKA CHEMICAL CORP [JP]) 30 October 2019 (2019-10-30) * the whole document * | 1,3-14 | INV. C01G53/00 H01M4/04 H01M4/525 |
| X | EP 2 492 243 A1 (TODA KOGYO CORP [JP]) 29 August 2012 (2012-08-29) * examples * | 1,3-14 | |
| A | US 2017/293707 A1 (XIN JIANZHUO [HK] ET AL) 12 October 2017 (2017-10-12) * page 4, paragraph 83-95 * * page 5, paragraph 104 * * examples * | 1,3-14 | |
| A | US 2012/130692 A1 (LI JUN [CN] ET AL) 24 May 2012 (2012-05-24) * the whole document * | 1,3-14 | |

TECHNICAL FIELDS
SEARCHED (IPC)

C01G
H01M

The present search report has been drawn up for all claims

| Place of search | Date of completion of the search | Examiner |
|---|---|---|
| Munich | 27 May 2021 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 21 2953

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2021

| Patent document cited in search report | | Publication date | Patent family member(s) | | | Publication date |
|---|---|---|---|---|---|---|
| EP 3561923 | A1 | 30-10-2019 | CN | 110192297 | A | 30-08-2019 |
| | | | EP | 3561923 | A1 | 30-10-2019 |
| | | | JP | 6412094 | B2 | 24-10-2018 |
| | | | JP | 2018106892 | A | 05-07-2018 |
| | | | KR | 20190095927 | A | 16-08-2019 |
| | | | US | 2019334170 | A1 | 31-10-2019 |
| | | | WO | 2018123817 | A1 | 05-07-2018 |
| EP 2492243 | A1 | 29-08-2012 | CA | 2778286 | A1 | 28-04-2011 |
| | | | CN | 102574700 | A | 11-07-2012 |
| | | | CN | 106395918 | A | 15-02-2017 |
| | | | EP | 2492243 | A1 | 29-08-2012 |
| | | | JP | 5672442 | B2 | 18-02-2015 |
| | | | JP | 2011105588 | A | 02-06-2011 |
| | | | KR | 20120098631 | A | 05-09-2012 |
| | | | US | 2013045421 | A1 | 21-02-2013 |
| | | | WO | 2011049185 | A1 | 28-04-2011 |
| US 2017293707 | A1 | 12-10-2017 | CN | 107273559 | A | 20-10-2017 |
| | | | US | 2017293707 | A1 | 12-10-2017 |
| US 2012130692 | A1 | 24-05-2012 | US | 2012130692 | A1 | 24-05-2012 |
| | | | US | 2019088976 | A1 | 21-03-2019 |

EPO FORM P0459

For more details about this annex : see Official Journal of the European Patent Office, No. 12/82